# EUROPEAN PATENT SPECIFICATION

(11) **EP 2 581 616 B1**
(45) Date of publication and mention of the grant of the patent: **13.03.2019**
(21) Application number: 11792391.2
(22) Date of filing: 06.06.2011
(51) Int. Cl.: F16C 33/64, B23K 9/00, B23K 31/00

(54) **RING MEMBER FOR ROLLING BEARING RACEWAY RING AND ROLLING BEARING**
RINGELEMENT FÜR EINEN KUGELLAGERBAHNENRING UND KUGELLAGER DAMIT
ÉLÉMENT ANNULAIRE POUR BAGUE À CHEMIN DE ROULEMENT POUR ROULEMENT ET ROULEMENT

(30) Priority: 09.06.2010 JP 2010131621
(43) Date of publication of application: 17.04.2013
(73) Proprietor: NTN Corporation, Osaka-shi, Osaka 550-0003 (JP)
(72) Inventor: MATSUBARA, Yukio, Kuwana-shi Mie 511-0867 (JP); TANAKA, Hiromasa, Kuwana-shi Mie 511-0867 (JP)
(74) Representative: Patentanwälte Behrmann Wagner PartG mbB
(86) International application number: PCT/JP2011/062917
(87) International publication number: WO 2011/155434

(56) References cited:
- EP-A1- 2 130 640
- DE-A1-102005 014 967
- JP-A- 1 234 619
- JP-A- S5 581 030
- JP-A- 55 065 724
- JP-A- 55 081 030
- JP-A- 2002 206 543
- JP-A- 2003 222 146
- JP-B- 45 015 873
- US-A- 3 387 900

## Description

### BACKGROUND OF THE INVENTION

### (Field of the Invention)

The present invention relates to a ring member, which can be used as a rolling bearing ring and to a rolling bearing ring and a rolling bearing assembly both utilizing such ring member and, also, to a method of manufacturing such ring member and a method of manufacturing such rolling bearing ring. More specifically, the present invention relates to the formation of a ring member by shaping a rod-like member, which has been rolled so as to have a required forging ratio and a required cross sectional area, to a ring shape and subsequently jointing opposite ends of the ring shaped rod-like member together.

### (Description of Related Art)

A raw material for a bearing ring used in a large sized rolling bearing assembly in a small lot, in particular a rolling bearing assembly used in supporting a wind turbine main shaft, has been manufactured through a process of shaping an ingot casted steel material to a round rod member by means of forging and then shaping the round rod member to a ring shape by means of a hot rolling forging technique, or of shaping an ingot casted steel material to a square rod member by means of a rolling technique, then shaping the square rod member to a round rod member and finally shaping the round rod member to a ring shape by means of a hot rolling forging technique.
From the patent document US 3 387 900 A it is known to form a roller bearing ring from a flat piece of bar stock bent to a circular shape. The edges of the joined end faces are joined by a liquid phase bonding by means of a weld at the juncture of the chamfered abutting end faces of the ring.

Also, as a method of making a ring member that is used as a small sized component part such as, for example, an automobile starter ring gear or the like, a method in which a rod-like member is rounded with its opposite ends subsequently jointed together to thereby provide the ring member has been suggested. In this respect, see the patent document 2 listed below. The rod-like member used in the practice of this suggested method is rendered to be, for example, an extrusion processed article.

### [Prior Art Literature]

[Patent Document 1] JP Laid-open Patent Publication No. 2001-519853
[Patent Document 2] JP Examined Patent Publication No. H01-16578

In the practice of the ingot casting, coagulation takes place sequentially from an outer side towards an inner side. Since the coagulation is accompanied by the volumetric contraction or volume shrinkage, shrinkage cavities tend to develop within the ingot. Although those shrinkage cavities may be collapsed during a hot process (rolling, forging) to form forge welds, some of the shrinkage cavities may be occasionally left not collapsed, leaving some insufficient forge welds within the ingot, in the event that in view of the limitations on the size of the ingot the forging cannot be applied sufficiently. As a matter of course, the presence of the insufficient forge welds within the ingot is undesirable. It is quite clear that application of the sufficient forging is effective to improve the material property. Although it has been practiced to flatten the round rod member by upsetting the latter in an axial direction and then to punch a core portion thereof so as to remove the core portion of the rod member whose material property is inferior, the reality is that the whole shrinkage cavities cannot be completely removed. Also, since the core portion which has been punched out becomes a scrap metal, a problem arises that the process yield is low.

As discussed above, the conventional practice poses a problem in that a raw shaping material for the bearing ring used in the large sized rolling bearing assembly has an insufficient material property because of insufficient forging and, also, the process yield tends to be lowered during the core portion punching step of the forging process.

### SUMMARY OF THE INVENTION

In view of the foregoing, an object of the present invention is to provide a ring member for a rolling bearing ring, and such a rolling bearing ring, that lead to an improvement in quality that is accomplished by applying a sufficient forging so that the shrinkage cavities can be collapsed to form satisfactory forge welds, an improvement in yield that is accomplished by dispensing with the core portion punching process and a diametric expansion process, a cost reduction, an energy saving and a resource saving and, also, to provide a method of making the ring member and the rolling bearing ring. Another object of the present invention is to provide the rolling bearing assembly capable of effectively exhibiting various advantages afforded by the rolling bearing ring.

In order to accomplish the foregoing objects, a ring member for a rolling bearing ring, designed in accordance with the present invention, is a steel ring member that is a raw material before a mechanical processing in a bearing ring of a rolling bearing assembly is applied, in which a rod member having been rolled to have a sectional shape of the ring member is shaped to represent a ring shape with respective end faces of its opposite ends being joined together. The rod member referred to above is preferably in the form of the one having been rolled so as to have a required forging ratio.

According to the above described construction, since the rod member, which has been rolled so as to represent the sectional shape of the ring member, is shaped to the ring shape, a high qualification resulting from the shrinkage cavities having been sufficiently forged to form forge welds can be obtained. Also, since the core punching step and the diameter expanding step, both included in the conventional forging process, can be dispensed with, this reduction in processing steps leads to a reduction in cost and an energy saving and a resource saving can be achieved by an increase of the yield. When the bearing ring in the rolling bearing assembly is manufactured with the utilization of this ring member, the bearing ring of a high quality, which is obtained as a result of the sufficient forging to forge the shrinkage cavities, can be obtained. It is to be noted that the present invention is intended to achieve a high qualification with the shrinkage cavities sufficiently forged to form forge welds as hereinabove described and is therefore quite different in idea from, for example, the automobile starter ring gear or the like disclosed in the previously discussed patent document 2.

Formation of the rod member to the ring shape is preferably carried out under a soft high temperature condition such as, for example, a hot or warm condition. In the present invention the joining between the end faces referred to above is accomplished by means of a liquid phase bonding such as, for example, welding.

Although the sectional shape of the ring member may be a simple rectangular shape or the like, it is preferred that the ring member has an annular groove that is processed into a raceway groove of the rolling bearing assembly. In such case, since the rod member is the one having been rolled to a sectional shape of the ring member, the rod member is also rendered to have a sectional shape having a groove. By forming the groove at the stage of the ring member formed by means of a plastic processing, it is possible to reduce the machining allowance, to increase the yield and to reduce the processing time.

The ring member is preferably such that a circumferential portion, in which a joint between the end faces of the opposite ends exists, is provided with a marking used to identify the joint. Since there is fear that the joint may have a strength lower than that of any other portion, application of the marking for identification can provide the convenience for use of the joint in, for example, a non-load zone and/or can facilitate a process for strengthening the joint as will be described later.

After a turning has been effected to render the sectional shape to resemble the sectional shape of the bearing ring of the rolling bearing assembly, a treatment of strengthening a joint is applied to the joint between the end faces over at least an axial zone, which will become a raceway surface, and in a depthwise region in which a high stress acts by the effect of a rolling contact from a peripheral surface which will become the raceway surface. It is to be noted that the wording "the depthwise region in which the high stress acts by the effect of a rolling contact from the peripheral surface which will become the raceway surface" referred to above and hereinafter is to be understood as meaning, the depth which is four times the depth at which the maximum orthogonal shear stress becomes maximal. In such case, a safety design can be achieved, in which the maximum contact pressure up to at least 3 GPa is tolerated. In the case of a bearing ring of 2 to 4 meters, of which design ma ximum contact pressure is about 1.5 GPa, the depth at which the maximum orthogonal shear stress becomes maximal is about 1 mm. Accordingly, a joint strengthening depth of about 5 mm suffices and 10 mm is sufficient therefor.

Since there is fear that the strength will be insufficient with only the liquid phase bonding referred to above particularly where it is used as a rolling bearing ring, after the ring member has been turned, relative to a joint at a site of the rolling bearing ring which will become a raceway surface on which at least rolling load acts, the strength of the joint is increased to a depth at which a high stress acts under a rolling contact. As a method therefor, a solid phase bonding, for example, a friction stir welding is applied. After the joint has been strengthened, it is recommended to again apply a marking which will not disappear during the subsequent process step so that the joint strengthened portion can be identified.

A rolling bearing ring of the present invention is of a type, in which a turning, a heat treatment and a grinding are applied to the ring member for the rolling bearing ring of any one of the above described structures of the present invention. As hereinbefore discussed, in the case where the ring member is processed to the rolling bearing ring, an effect of the high qualification resulting from the shrinkage cavities having been sufficiently forged to form forge welds can be exhibited effectively.

It is desirable that this rolling bearing ring, which has the nominal diameter that is, for example, 1 meter or more in diameter, has a marking for identification of the joint, which is applied to the joint which is a circumferential portion where respective end faces of opposite ends thereof are jointed together. The presence of the marking makes it possible to employ the manner of use, in which no large load act on the joint.

A rolling bearing assembly designed in accordance with the present invention includes an inner ring, an outer ring, a plurality of rolling elements and a retainer, in which the rolling bearing ring of any one of the above described structures is used in one or both of the inner ring and the outer ring. This rolling bearing assembly may be a large sized rolling bearing assembly. By way of example, it may be a bearing assembly for supporting a main shaft of the wind turbine. While a supersized bearing assembly for the wind turbine main shaft, which has a diameter ranging to a few meters, is available in the market, an effect of increasing the quality resulting from the ring member can be effectively exhibited particularly where it is used in such a bearing assembly.

The rolling bearing assembly is desirably of a type, in which of the inner ring and the outer ring, the rolling bearing ring having the above described marking is used in a stationary side ring and the peripheral portion, where the marking for identifying the joint exists, is disposed in a non-load side of the stationary side ring. While there is fear that the joint between the opposite ends may have an insufficient strength, positioning of the joint at the non-load side, after it has been applied to the stationary side ring, makes it possible to refrain a large load from acting on the joint, thus avoiding the possibility of having the insufficient strength. In such case, the presence of the marking for identification of the joint simplifies an assembling work to position the joint in the non-load zone.

A method of manufacturing a ring member for a rolling bearing ring, designed in accordance with the present invention, is a method of manufacturing a steel ring member that is a raw material before a mechanical processing in a bearing ring of a rolling bearing assembly is applied, which method characterized by comprising the steps of shaping a rod member, which has been rolled to have a sectional shape of the ring member, to a ring shape and of joining end faces of opposite ends together by a liquid face bonding. According to this manufacturing method, a high qualification, which has resulted from the shrinkage cavities having been sufficiently forged to form forge welds as hereinbefore described in connection with the ring member for the rolling bearing ring, can be obtained. Also, since the core punching step and the diameter expanding step, both included in the conventional forging process, is dispensed with, a reduction in cost, an energy saving and a resource saving resulting from an increase of the yield can be obtained.

A method of manufacturing a rolling bearing ring, designed in accordance with the present invention, is a method of manufacturing a bearing ring having a raceway groove for a rolling bearing assembly, which method comprises a raw material making step for manufacturing a steel ring member, which will become a raw material for the bearing ring having an annular groove that is processed to the raceway groove, according to the manufacturing method as above described and a raw material processing step for applying a turning, a heat treatment and a grinding to the ring member. This manufacturing method, as hereinbefore described in connection with the rolling bearing ring leads to a high qualification resulting from the shrinkage cavities having been sufficiently forged to form forge welds, a reduction in cost resulting from the elimination to use the center punching step and the diameter expanding step, an energy saving and a resource saving resulting from an increase of the yield.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1Aa is an explanatory diagram showing a method of making a ring member that can be used as a bearing ring designed in accordance with a preferred embodiment of the present invention;
Fig. 1Ab shows an example of a cross-sectional shape of a rod member;
Fig. 1Ac shows an example of a different cross-sectional shape of a rod member;
Fig. 1Ba is a diagram showing a front elevational view of the ring member, made by the ring member making method of Fig. 1Aa;
Fig. 1Bb shows an example of a cross-sectional shape of the ring member;
Fig. 1Bc shows an example of a different cross-sectional shape of the ring member;
Fig. 2A is a fragmentary sectional view showing on example of the rolling bearing assembly, in which the ring member is used as a raw material;
Fig. 2B is an enlarged sectional view of an outer ring of the rolling bearing assembly in a condition before it is turned;
Fig. 3 is an explanatory diagram showing a non-loaded zone of the bearing assembly;
Fig. 4 is a fragmentary longitudinal sectional view showing another example of the rolling bearing assembly in which the ring member is used as a raw material;
Fig. 5 is a fragmentary longitudinal sectional view showing a different example of the rolling bearing assembly in which the ring member is used as a raw material;
Fig. 6 is a structural explanatory diagram showing a wind turbine generator utilizing the rolling bearing assembly;
Fig. 7 is a perspective view showing one example of a raw material forming a test piece that is used in testing the friction stir welding, which is one example of a toughening treatment applicable to the ring member;
Fig. 8 is an explanatory diagram showing the test piece used in an axial load fatigue strength test, which is included in the test;
Fig. 9 is an explanatory diagram showing the test piece used in a torsional fatigue strength test which is included in the test;
Fig. 10 is an explanatory diagram showing a testing machine used to perform the test referred to above;
Fig. 11 is a chart showing results of the axial load fatigue strength test, which is included in the test referred to above; and
Fig. 12 is a chart showing results of the torsional fatigue strength test, which is included in the test referred to above.

### DESCRIPTION OF PREFERRED EMBODIMENTS

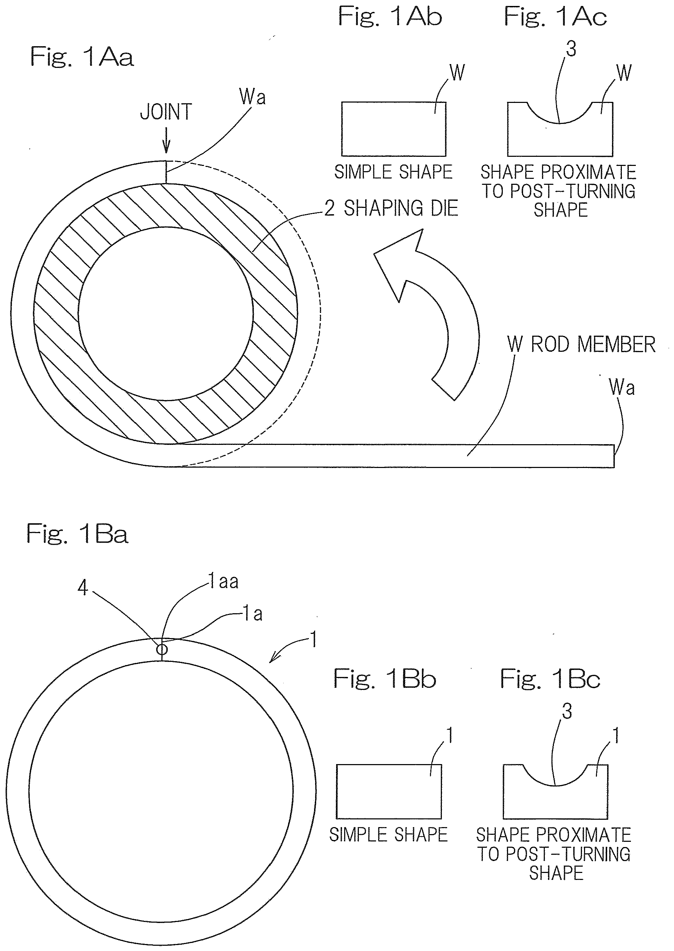

A ring member for a rolling bearing ring designed in accordance with a preferred embodiment of the present invention, the bearing ring and a method of making the same will now be described with particular referenced to Figs. 1Aa, 1Ab and 1Ac to Fig. 3. The ring member shown by 1 in Figs. 1Ba to 1Bc is of a kind, in which as shown in Fig. 1Aa, a straight rod member W of a steel material, which has been rolled so as to have a forging ratio and a sectional shape, both required as the ring member 1, is wound around an outer periphery of a shaping die 2 of a cylindrical configuration with respective end faces Wa and Wa of opposite ends thereof jointed together to render the rod member W to represent a ring shape. The rod member W is rolled so as to have a sectional shape similar to the sectional shape of the ring member 1 and has a circumferential length equal to that of the ring member 1. It is to be noted that strictly speaking, although the sectional shape of the rod member W may be somewhat changed when the rod member W is formed into the ring shape, the term "sectional shape" referred to here is intended to mean that the sectional shape remains the same with no attention paid to the change in sectional shape resulting from the shaping into the ring shape as described above. Also, as another method of making the ring member, a ring formation by means of a three point bending system, in which three rolls are employed to define points of support, can be employed.

Shaping of the rod member W into the ring shape is possible with a cold process, but where the rod member W has a height or width exceeding 50 mm, it is preferred to shape the rod member W under a soft elevated temperature. For example, it may be a warm forming or a hot forming with the rod member W heated. Instead of the rod member W being heated, formation of the rod member W into the ring shape may be carried out following the rolling of the rod member W and during a period before the rod member W is cooled down. Jointing of the end faces Wa and Wa of the rod member W is accomplished by a liquid phase bonding, for example, a welding. At a joint 1a, which is a circumferential portion at which the opposite end faces Wa and Wa of the rod member W is jointed, a marking 4 for providing an indication of the joint 1a is applied. The marking 4 may be in the form of a visual indication of the joint 1a such as an embossed marking, a portion where a line or a symbol is depicted, or a colored portion. This marking 4 may be either applied to a side face of the ring member 1 or an inner or outer peripheral surface of such ring member 1. The marking 4 is applied for the purpose that the site of the joint 1a can be identified at the time a joint strengthening treatment as will be described later is to be performed. For this reason, it is preferred that the site and shape or pattern of the marking 4 should be carefully chosen so that the applied marking 4 will not disappear from the joint 1a during a turning process that takes place before the joint strengthening treatment.

The sectional shape of the ring member 1 shown in Fig. 1Ba may be of a simple shape such as, for example, a rectangular shape as shown in Fig. 1Bb, but where the ring member 1 is applied to a rolling bearing ring having a raceway groove, it is rendered to be a shape of a kind having an annular groove 3 that is processed in the raceway groove as shown in Fig. 1Bc. In such case, the rod member W, too, is rendered to be rolled to a sectional shape of rectangular as shown in Fig. 1Ab or to be rolled to a sectional shape of a kind having a similar groove 3 of the ring member 1 as shown in Fig. 1Ac. If the ring member 1 is formed to a pre-turning shape (a shape before the turning is effected), which is a shape proximate to a post-turning shape (a shape after the turning has been effected) having the annular groove 3, the turning allowance can be reduced, thereby leading to a further reduction in cost, an energy saving and a resource saving.

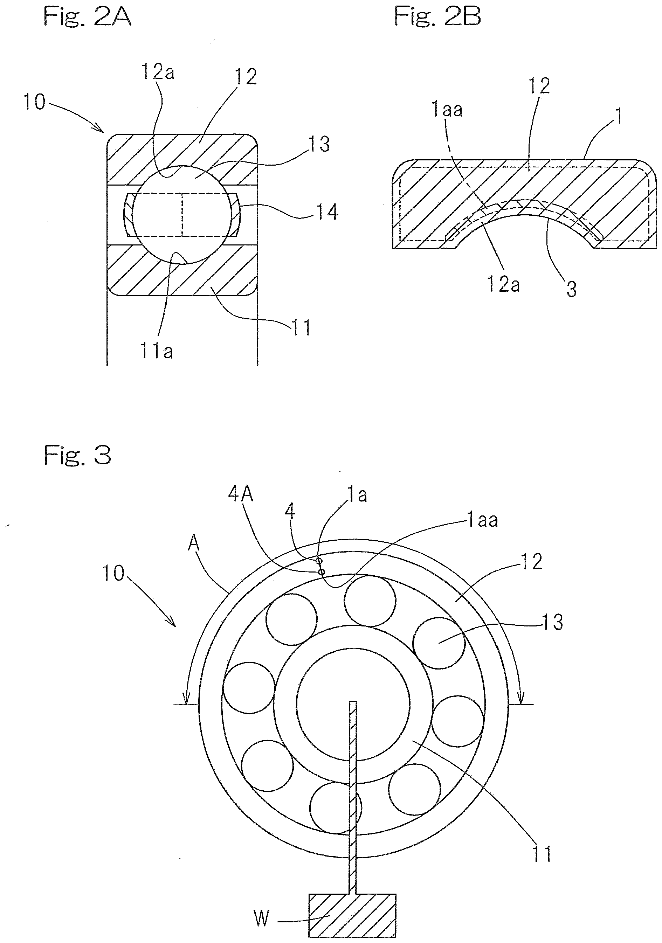

Fig. 2A illustrates one example of the rolling bearing assembly utilizing the ring member 1 referred to hereinabove. The illustrated rolling bearing assembly 10 is in the form of a deep groove ball bearing and includes an inner ring 11, an outer ring 12, a plurality of rolling elements 13 and a retainer 14, in which as a pre-turning raw material for one or both of the inner ring 11 and the outer ring 12, the ring member 1 shown in Figs. 1Ba to 1Bc is used. The inner ring 11 and the outer ring 12 have respective raceway grooves 11a and 12a, which will become raceway surfaces. Fig. 2B illustrates the sectional shape of the ring member 1 where the ring member 1 referred to above is used for the outer ring 12 of the rolling bearing assembly 10 shown in Fig. 2A. Referring to Fig. 2B, the solid line shows the shape of the ring member 1 which is a pre-turning raw material, whereas the broken line shows the shape after the turning has been finished. The turning is carried out by means of, for example, a rough turning and a finishing turning.

If the ring member 1 is manufactured in this way, a high qualification resulting from shrinkage cavities having been sufficiently forged to form forge welds can be obtained and a reduction in cost, energies and a resource saving as a result of an increase in yield can be obtained while the core punching step and the diameter expanding step, both included in the conventional forging process, are dispensed with. As a method of manufacturing a ring shaped raw material for an automobile starter ring gear, a method has hitherto been suggested in which the ring member is formed from the rod shaped raw material as disclosed in the patent document 2 referred to previously. However, the method disclosed in the patent document 2 makes no use of the rod member that has been rolled. Also, the large sized rolling bearing assembly such as, for example, that for the support of a wind turbine main shaft, to which the embodiment now under discussion is applied, is a supersized rolling bearing assembly of a type having a diameter ranging to a few meters and makes use of the rod member W that is quite different in size from that used in the practice of the method disclosed in the patent document 2 and is also different from the patent document 2 in required techniques and equipments to realize it. Hence, this embodiment and the manufacturing method of the patent document 2 have different ideas.

If the sectional shape of the ring member 1 is of the pre-turning shape of the rolling bearing ring as shown in Fig. 1Bc, not of the simple shape such as, for example, a rectangular shape, the turning allowance can be reduced, resulting in a further reduction in cost, energy and resource.

If the joint 1a in the ring member 1 is achieved by means of only the liquid phase bonding as hereinbefore described, there is the risk that the strength will be insufficient when the ring member 1 is used as the rolling bearing ring. For this reason, after a rough turning process has been effected to the ring member 1, a treatment of strengthening the joint is performed over at least an axial range, which will become raceway grooves 11a and 12a, to such a depthwise extent that a high stress may act from a peripheral surface, which will become a raceway surface, by the effect of a rolling contact. By way of example, at least the axial range of the joint 1a, which will become the raceway surfaces 11a and 12a of the rolling bearing ring that support a rolling load, is rendered to be a joint strengthened portion 1aa (one example of which is shown by the hatching in Fig. 2B) at which a treatment to increase the strength of the joint la has been effected to a depth to which the high stress acts by the effect of the rolling contact. It is to be noted that the depth to which the high stress acts by the effect of the rolling contact is at most about 5 mm if the diameter of the ring member 1 is a few meters, but in Fig. 2B, the joint strengthened portion 1aa is shown as largely exaggerated for the purpose of clarity.

The wording "the depth to which the high stress acts by the effect of the rolling contact" referred to above and hereinafter is to be understood as meaning, for example, as hereinbefore described, the depth that is four times the depth at which the maximum orthogonal shear stress becomes maximal. In this case, it will become a safety design to such an extent that at least 3 GPa of the maximum contact pressure can be tolerated. In the case of the bearing ring of 2 to 4 meters in diameter, in which the design maximum contact pressure is about 1.5 GPa, the depth at which the maximum orthogonal shear stress is maximized is about 1 mm. Accordingly, the joint strengthening depth suffices to be about 5 mm and 10 mm is sufficient enough therefor. As a strength increasing method, a solid phase bonding under a cold state such as, for example, a friction stir welding is applied. Thereby, as demonstrated by an experimental example as will be described later, a sufficient strength can be secured in the joint 1a. After the joint la has been strengthened, it is preferred to apply a marking 4A (shown in Fig. 3) of a kind that will not disappear during the subsequent process steps so that the joint strengthened portion 1aa can be discriminated. It is to be noted that the term "friction stir welding" referred to hereinbefore and hereinafter is intended to mean a joining method in which a cylindrical tool is, while it is rotated, penetrated into a joint of members to be connected together (matrix) with a strong force thereby to generate a frictional heat so that the matrix can be softened and, at the same time, plastic flow is generated at the neighborhood of the joint by the effect of a rotational force of the tool to be thereby kneaded and stirred to achieve an integration of a plurality of members.

The joint 1a of the ring member 1, although capable of securing a required strength, has a somewhat inferior strength as compared with that of a non-joint. Because of it, the joint 1a or the joint strengthened portion 1aa is preferably disposed at a position where it is insusceptible to a large load. By way of example, in the case of the outer member 12 employed in the rolling bearing assembly of an inner ring rotation type, the joint 1a or the joint strengthened portion 1aa has to be disposed within a non-load zone A as shown in Fig. 3. At this time, the marking 4 applied to a certain circumferential position of the joint 1a becomes valid. The non-load zone A of the outer ring 12 is a circumferential region of, for example, an upper half when the rolling bearing assembly 10 is disposed with a transverse axis. When the bearing assembly 10 is disposed with a transverse axis, the load W acting on the inner ring 11 does not act on the circumferential region of the upper half of the outer ring 12 and, therefore, such region becomes the non-load zone.

As a steel for the rolling bearing assembly, which is used for the support of the wind turbine main shaft, JIS-SNCM 815, that is, a carburized steel is available and this steel is utilized. In recent years, the wind turbine comes to be installed on the ocean. Also, it appears that rolling bearing assemblies for a tidal power generation will come to be necessitated in the near future. Under these circumstances, it appears that the amount of water mixing into the rolling bearing assembly 10 will increase. Under the contact between the rolling bearing assembly and water, water will become a source of generation of hydrogen and it is suspected that an early flaking failure resulting from the generation of hydrogen will possibly occur increasingly. With the manufacturing method according to the embodiment now under discussion, it appears that acquisition of the ring member of a steel of a kind having a hydrogen resistance, such as, for example, a stainless steel, which has hitherto been untreatable, will become possible.

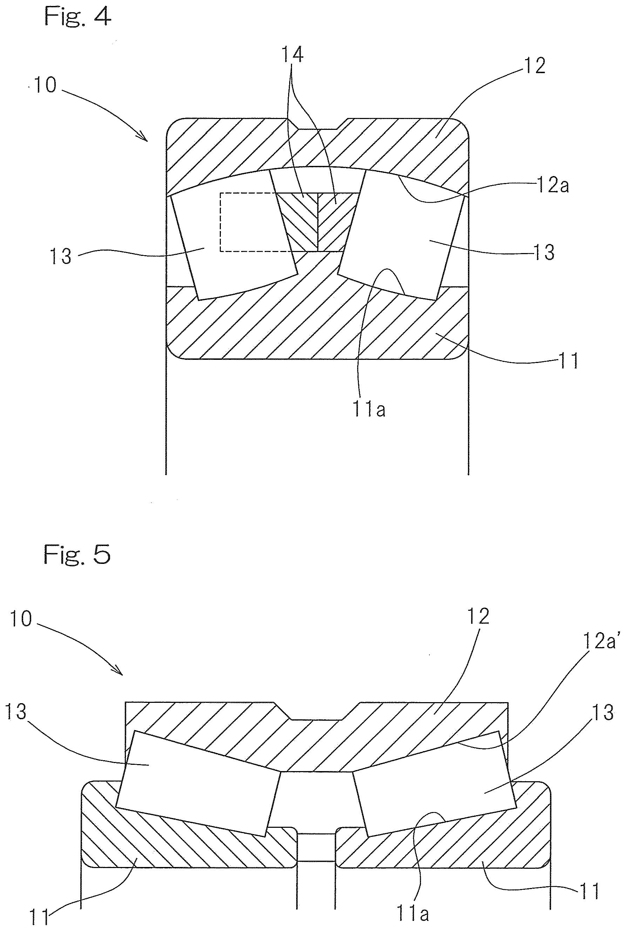

It is to be noted that although in describing the foregoing embodiment, reference has been made to the use of the ring member 1, as shown in Figs. 1Ba to 1Bc, as a raw material for the outer ring 12 of the rolling bearing assembly 10 in the form of the deep groove ball bearing, the ring member 1 shown in Fig. 1Ba to 1Bc can also be used as a raw material for the bearing ring, which will become the inner ring 11 or the outer ring 12, in various rolling bearing assemblies such as, for example, a self-aligning roller bearing in Fig. 4 or a double row tapered roller bearing assembly shown in Fig. 5. It is, however, to be noted that in such case, the respective sectional shapes of the ring member 1 and the rod member W have to be of a shape having a groove 3 that is processed into the raceway grooves 11a and 12a in the bearing ring. Also, where a raceway surface 12a' has, for example, a flat conical surface or the like which is not used as a raceway groove as is the case with the outer ring 12 used in a double row tapered roller bearing assembly shown in Fig. 5, the sectional shape of the ring member 1 and the rod member W are of a shape having a circumferential surface portion following the raceway surface 12a' so that circumferential surface portion can be processed into the raceway surface 12a' with a reduced machining allowance.

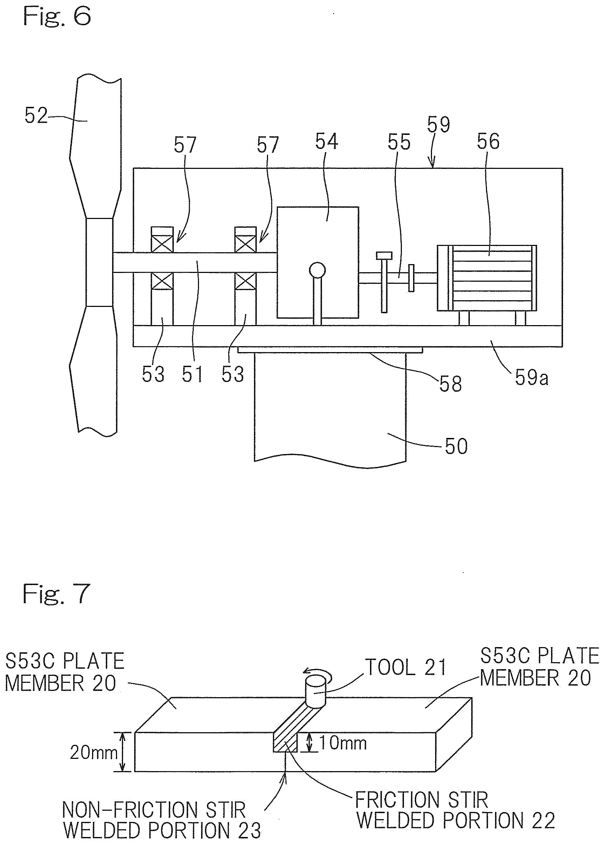

Fig. 6 illustrates one example of a wind turbine generating apparatus which utilizes the rolling bearing assembly 10 designed in accordance with the above described embodiment. A casing 59a for a nacelle 59 is horizontally swingably mounted on a support pedestal 50 through a revolving bearing assembly 58. Within the casing 59a for the nacelle 59, a main shaft 51 is rotatably supported through a plurality of main shaft support bearing assemblies 57 that are installed within respective bearing housings 53, and a blade assembly 52, which serves as a revolving swirler, is fitted to a first end portion of the main shaft 51 which protrudes outwardly from the casing 59a. A second end portion of the main shaft 51 opposite to the first end portion thereof is drivingly coupled with a speed increaser or speed-up gear 54 having its output shaft which is in turn drivingly coupled with a rotor shaft 55 of a power generating machine 56. Although the main shaft support bearing assembly 57 has been shown as used in two in number in a fashion juxtaposed to each other, the number thereof may be one. The rolling bearing assembly 10 of the structure designed in accordance with the above described embodiment shown in any one of Fig. 3, Fig. 4 and Fig. 5 is used for each of the main shaft support bearing assemblies 57.

Hereinafter, a method of testing the strength of the friction stir welding applied to the joint strengthened portion 1aa (shown in Fig. 2B) and a result of such test will be explained. As shown in Fig. 7, an experiment was conducted, in which a pair of plate members (having a hardness of 210 HV) 20, each made of JIS-S53C and having a thickness of 20 mm, were abutted with each other and the friction stir welding was then made along a joint between the mating ends of those plate members up to a depth of 10 mm. A rotary tool 21 for performing the friction stir welding is made of a ceramic material and is of a cylindrical shape of 15 mm in diameter. The rotational speed and the feed speed were chosen to be 500 min⁻¹ and 200 mm/min, respectively.

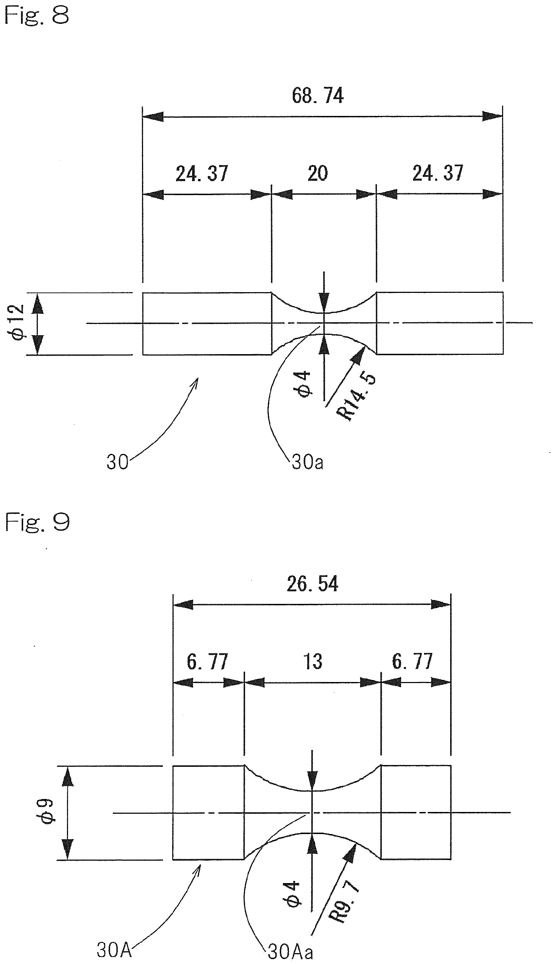

Using the resultant friction stir welded product shown in Fig. 7, an axial load fatigue test piece 30 (shown in Fig. 8) and a torsional fatigue test piece 30A (shown in Fig. 9), in which friction stir welded portions 22 were rendered to be respective nodes 30a and 30Aa, were prepared (friction stir welded products). Together therewith, an axial load fatigue test piece and a torsional fatigue test piece (non-friction stir welded products), both taken from plate members of the same material as that for the above described plate members 20, were made so as to have the same shape and dimensions as those of the friction stir welded product. The specification of each of the test pieces 30 and 30A are shown in Figs. 8 and 9, respectively. Each of those test pieces was finished by grinding after it has been machined to such a shape as shown in Fig. 8 or Fig. 9 and then hardened by means of an induction hardening process. At the time of the induction hardening, each of the nodes was uniformly hardened to the core and a prior austenite grain size was rendered to be #9. The axial load and the torsion were both evaluated by means of an ultrasonic fatigue test (fully reversed with the oscillating frequency of 20 kHz).

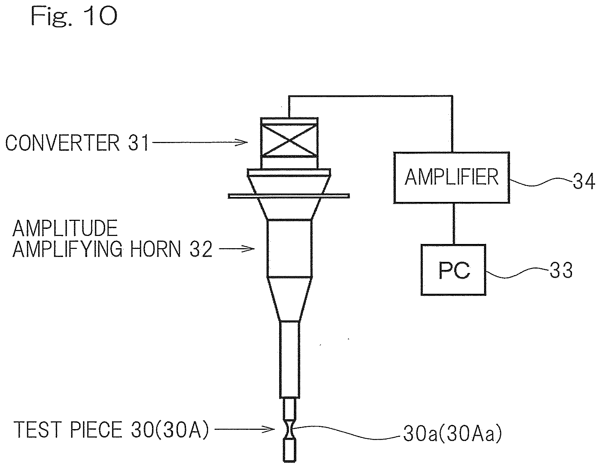

An ultrasonic fatigue testing machine is schematically shown in Fig. 10. The ultrasonic fatigue testing machine includes an amplitude amplifying horn 32 having a tip fitted to one end of the respective test piece 30 or 30A by means of a male screw portion (not shown) and a base connected to a converter 31 so that vibrations generated by the converter 31 can be transmitted to the test piece 30 or 30A after the vibration so generated have been amplified by the amplitude amplifying horn 32. The converter 31, the amplitude amplifying horn 32 and the test piece 30 or 30A are all designed so as to be resonated at 20 kHz and a large stress repeatedly acts on the node 30a or 30Aa at 20 kHz. The other end of each of the test pieces 30 and 30A is in a condition having been non-constrained. The converter 31 is driven by an output of an amplifier 34 under the control of a personal computer 33. The difference between the axial load and the torsion lies in whether the converter 31 undergoes an axial vibration or a torsional vibration.

Prior to the ultrasonic fatigue test, an emery grinding (#500, #2000) and a diamond lapping (1 µm in particle size) were applied to the nodes 30a and 30Aa. Because the ultrasonic fatigue test is a high speed oscillation and the ultrasonic fatigue test, when continuously repeated, evolves heat, an intermittent loading, in which a load is applied for 110 msec. and a halt takes place for 1100 msec. are alternated, was carried out. Unless fracture occurs by the time 10⁸ cycles of the intermittent loading attains, the test was cut off.

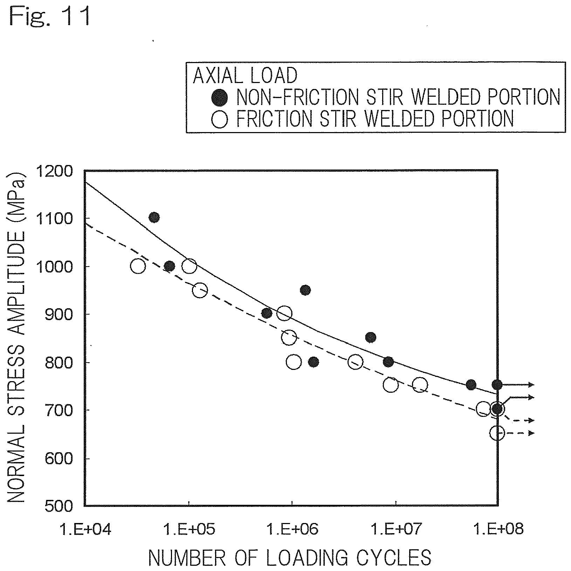

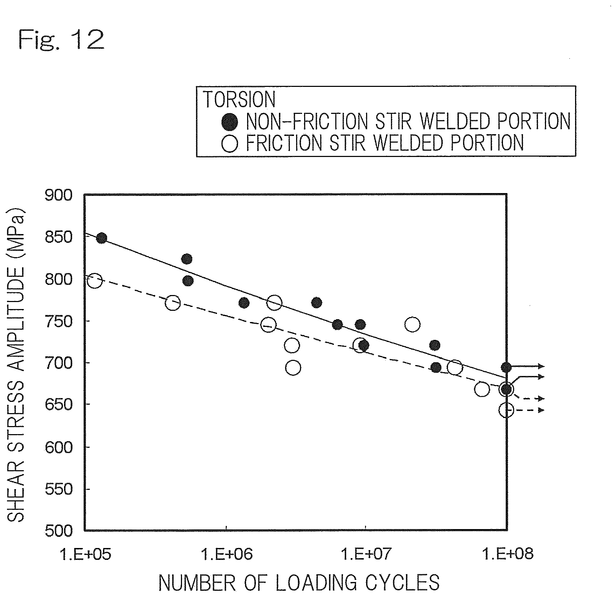

The ultrasonic fatigue test results on the axial load fatigue and the torsional fatigue are shown in Figs. 11 and 12, respectively. With respect to the axial load and the torsion, the friction stir welded product has shown a somewhat reduction in strength as compared with the non-friction stir welded product. Since the rolling bearing assembly for the support of the wind turbine main shaft is used for a prolonged period of time, the maximum contact pressure, which acts during the normal operation, is equal to or lower than 1.5 GPa and the safety design has been established in that the maximum contact pressure will not exceed 2 GPa even when a strong wind, which is considered occurring once a period of 20 years, blows. At 1.5 GPa of the maximum contact pressure, if the axial load fatigue strength under the fully reversed mode is higher than 500 MPa even though the coefficient of rolling friction is largely estimated µ = 0.05, there is no possibility that cracking is caused by a normal stress amplitude that repeatedly acts on a contact surface in a circumferential direction. From the test result shown in Fig. 11, since the axial load fatigue strength at the 10⁸ cycles is about 700 MPa, it may be said that no surface origin fatigue fracture will occur. In ISO 2007, the fatigue strength maximum contact pressure of the rolling bearing assembly is set to 1.5 GPa, and the maximum orthogonal shear stress amplitude that acts inside a subsurface in such case is τ₀ = 375 MPa. From the test result shown in Fig. 12, since the torsional fatigue strength at the 10⁸ cycles is about 650 MPa, it can be said that no subsurface origin fatigue fracture will occur.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

### [Reference Numerals]

- 1: Ring member
- 1a: Joint
- 1aa: Joint strengthened portion
- 2: Shaping die
- 3: Groove
- 4: Marking
- 4A: Marking
- 10: Rolling bearing assembly
- 11: Inner ring
- 12: Outer ring
- 13: Rolling element
- 14: Retainer
- A: Load zone
- W: Rod member
- Wa: End face

## Claims

1. A ring member (1) for a rolling bearing ring, which is a steel ring member (1) that is a raw material before a mechanical processing in a bearing ring of a rolling bearing assembly (10) is applied, wherein:
a rod member (W) having been rolled to have a sectional shape of the ring member (1) is shaped to represent a ring shape with respective end faces (Wa) of its opposite ends being joined together by a liquid phase bonding;
a turning is effected to render the sectional shape, obtained by a rolling, to resemble a sectional shape of the bearing ring of the rolling bearing assembly (10);
and after the turning, a solid phase bonding, which is a treatment of strengthening a joint (1a), is applied to the joint (1a) between the end faces (Wa) over at least an axial zone, which will become a raceway surface, and in a depthwise region in which a high stress acts by the effect of a rolling contact from a peripheral surface which will become the raceway surface, the depthwise region being a depth that is four times a depth at which a maximum orthogonal shear stress becomes maximal.

2. The ring member for the rolling bearing ring as claimed in claim 1, which has an annular groove (3) that is processed into a raceway groove (3) of the rolling bearing assembly (10).

3. The ring member for the rolling bearing ring as claimed in claim 1, in which a circumferential portion, in which a joint (1a) between the end faces (Wa) of the opposite ends exists, is provided with a marking (4) used to identify the joint (1a).

4. A rolling bearing ring of a type, in which a turning, a heat treatment and a grinding are applied to the ring member (1) for the rolling bearing ring as described in claim 1.

5. The rolling bearing ring as claimed in claim 4, in which a joint (1a), which is a circumferential portion where the end faces (Wa) of the opposite ends are joined together, is provided with a marking (4) for identifying the joint (1a).

6. A rolling bearing assembly (10), which comprises an inner ring (11), an outer ring (12), a plurality of rolling elements (13) and a retainer (14), in which the rolling bearing ring as described in claim 4 is used in one or both of the inner ring (11) and the outer ring (12).

7. The rolling bearing assembly (10) as claimed in claim 6, which is a bearing for supporting a main shaft of a wind turbine.

8. The rolling bearing assembly (10) as claimed in claim 6, in which of the inner ring (11) and the outer ring (12), the rolling bearing ring as described in claim 5 is used in a stationary side ring and a peripheral portion, where the marking (4) for identifying the joint (1a) exists, is disposed in a non-load side of the stationary side ring.

9. A method of manufacturing a ring member (1) for a rolling bearing ring, which is a method of manufacturing a steel ring member (1) that is a raw material before a mechanical processing in a bearing ring of a rolling bearing assembly (10) is applied, which method comprises the steps of:
shaping a rod member (W), which has been rolled to have a sectional shape of the ring member (1), to a ring shape and of joining end faces (Wa) of opposite ends together by a liquid phase bonding;
turning the sectional shape, obtained by a rolling, to resemble a sectional shape of the bearing ring of the rolling bearing assembly (10); and
a solid phase bonding, which is a treatment of strengthening a joint (1a), is applied to the joint (1a) between the end faces (Wa) over at least an axial zone, which will become a raceway surface, and in a depthwise region in which a high stress acts by the effect of a rolling contact from a peripheral surface which will become the raceway surface, the depthwise region being a depth that is four times a depth at which a maximum orthogonal shear stress becomes maximal.

10. A method of manufacturing a rolling bearing ring, which is a method of manufacturing a bearing ring having a raceway groove (3) for a rolling bearing assembly (10), which method comprises:
a raw material making step for manufacturing a steel ring member (1), which will become a raw material for the bearing ring having an annular groove (3) that is processed to the raceway groove (3), according to the manufacturing method as described in claim 9; and
a raw material processing step for applying a turning, a heat treatment and a grinding to the ring member (1).

## Patentansprüche

1. Ringelement (1) für einen Wälzlagerring, welches ein Stahl-Ringelement (1) ist, das vor der Anwendung einer mechanischen Verarbeitung in einem Lagerring einer Wälzlageranordnung (10) ein Rohmaterial ist, wobei:
ein zu einer Querschnittsform des Ringelements (1) ausgewalztes Stabelement (W) zur einer Ringform geformt wird, bei der die entsprechenden Endflächen (Wa) der gegenüberliegenden Enden durch Flüssigphasenverbinden miteinander verbunden werden;
ein Drehen erfolgt, um die durch Auswalzen entstandene Querschnittsform einer Querschnittsform des Lagerrings der Wälzlageranordnung (10) anzugleichen;
und nach dem Drehen ein Festphasenverbinden, welches eine Behandlung zur Verstärkung einer Verbindungsstelle (1a) ist, auf die Verbindungsstelle (1a) zwischen den Endflächen (Wa) über mindestens einen Axialbereich, der zu einer Laufbahnoberfläche werden wird, und in einem Tiefenbereich, in dem von einer Umfangsfläche, die zu der Laufbahnoberfläche wird, durch den Wälzkontakt eine hohe Belastung ausgeübt wird, angewandt wird, wobei der Tiefenbereich eine Tiefe ist, die dem Vierfachen einer Tiefe entspricht, bei der eine maximale orthogonale Scherbelastung am größten ist.

2. Ringelement für den Wälzlagerring nach Anspruch 1, welches eine ringförmige Rille (3) aufweist, die zu einer Laufbahnrille (3) der Wälzlageranordnung (10) verarbeitet wird.

3. Ringelement für den Wälzlagerring nach Anspruch 1, bei dem ein Umfangsabschnitt, der eine Verbindungsstelle (1a) zwischen den Endflächen (Wa) der gegenüberliegenden Enden aufweist, mit einer Markierung (4) zur Identifizierung der Verbindungsstelle (1a) versehen ist.

4. Wälzlagerring von der Bauart, bei der das Ringelement (1) für den in Anspruch 1 beschriebenen Wälzlagerring einem Drehen, einer thermischen Behandlung und einem Schleifen unterzogen wird.

5. Wälzlagerring nach Anspruch 4, bei dem eine Verbindungsstelle (1a), die einen Umfangabschnitt darstellt, in dem die Endflächen (Wa) der gegenüberliegenden Enden miteinander verbunden sind, mit einer Markierung (4) zur Identifizierung der Verbindungsstelle (1a) versehen ist.

6. Wälzlageranordnung (10), welche einen Innenring (11), einen Außenring (12), eine Vielzahl von Wälzelementen (13) und einen Käfig (14) aufweist und bei welcher der in Anspruch 4 beschriebene Wälzlagerring in dem Innenring (11) und/oder dem Außenring (12) verwendet wird.

7. Wälzlageranordnung (10) nach Anspruch 6, die ein Lager zur Lagerung einer Hauptwelle einer Windturbine darstellt.

8. Wälzlageranordnung (10) nach Anspruch 6, in welcher von dem Innenring (11) und dem Außenring (12) der wie in Anspruch 5 beschriebene Wälzlagerring in einem stehenden Seitenring verwendet wird und ein peripherer Abschnitt, in dem die Markierung (4) zur Identifizierung der Verbindungsstelle (1a) angebracht ist, an einer nichttragenden Seite des stehenden Seitenrings angeordnet ist.

9. Herstellungsverfahren für ein Ringelement (1) für einen Wälzlagerring, welches ein Verfahren zur Herstellung eines Stahl-Ringelements (1) ist, das vor der Anwendung einer mechanischen Verarbeitung in einem Lagerring einer Wälzlageranordnung (10) ein Rohmaterial ist, wobei das Verfahren die folgenden Schritte umfasst:
Formen eines Stabelements (W), welches zu einer Querschnittsform des Ringelements (1) ausgewalzt wurde, zu einer Ringform und Verbinden der Endflächen (Wa) von gegenüberliegenden Enden durch Flüssigphasenverbinden;
Drehen der durch Auswalzen entstandenen Querschnittsform zur Angleichung an eine Querschnittsform des Lagerrings der Wälzlageranordnung (10); und
Anwenden eines Festphasenverbindens, das eine Behandlung zur Verstärkung einer Verbindungsstelle (1a) darstellt, auf die Verbindungsstelle (1a) zwischen den Endflächen (Wa) über mindestens einen Axialbereich, der zu einer Laufbahnoberfläche werden wird, und in einem Tiefenbereich, in dem von einer Umfangsfläche, die zu der Laufbahnoberfläche wird, durch den Wälzkontakt eine hohe Belastung ausgeübt wird, angewandt wird, wobei der Tiefenbereich eine Tiefe ist, die dem Vierfachen einer Tiefe entspricht, bei der die maximale orthogonale Scherbelastung am größten ist.

10. Herstellungsverfahren für einen Wälzlagerring, das ein Verfahren zur Herstellung eines Lagerrings mit einer Laufbahnrille (3) für eine Wälzlageranordnung (10) ist, wobei das Verfahren die folgenden Schritte umfasst:
einen Schritt zur Herstellung eines Rohmaterials zur Herstellung eines Stahl-Ringelements (1), welches ein Rohmaterial für den eine ringförmige Rille, welche zu der Laufbahnrille (3) verarbeitet wird, aufweisenden Lagerring wird, nach dem Herstellungsverfahren nach Anspruch 9; und
einen Schritt zur Verarbeitung des Rohmaterials zur Anwendung eines Drehens, einer thermischen Behandlung und eines Schleifens auf das Ringelement (1).

## Revendications

1. Élément de bague (1) pour une bague de roulement à rouleaux, étant un élément de bague (1) en acier qui est un matériau de base avant l'application d'un traitement mécanique dans une bague de roulement d'un assemblage de roulement à rouleaux (10) ; dans lequel :
un élément en forme de tige (W) ayant été roulé pour avoir une forme en section transversale de l'élément de bague (1) est formé pour représenter une forme de bague dont les faces frontales (Wa) respectives de ses extrémités opposées sont reliées entre elles par une liaison en phase liquide ;
un tournage est effectué pour faire la forme en section transversale, obtenue par roulement, ressembler à une forme en section transversale de la bague de roulement de l'assemblage de roulement à rouleaux (10) ;
et, après le tournage, une liaison en phase solide, qui est un traitement de renforcement d'un joint (1a), est appliqué au joint (1a) entre les faces frontales (Wa) sur au moins une zone axiale, qui deviendra une surface de chemin de roulement, et dans une zone en profondeur dans laquelle une tension élevée agit par effet d'un contact de roulement à partir d'une surface périphérique qui deviendra la surface du chemin de roulement, la zone en profondeur étant une profondeur qui est quatre fois une profondeur à laquelle une tension maximale orthogonale de cisaillement devient maximale.

2. Élément de bague pour la bague de roulement à rouleaux selon la revendication 1, ayant une rainure annulaire (3) qui est transformée en une rainure de chemin de roulement (3) de l'assemblage de roulement à rouleaux (10).

3. Élément de bague pour la bague de roulement à rouleaux selon la revendication 1, dans lequel une partie circonférentielle, dans laquelle existe un joint (1a) entre les faces frontales (Wa) des extrémités opposées, est pourvue d'un marquage (4) pour identifier le joint (1a).

4. Bague de roulement à rouleaux d'un type dans lequel un tournage, un traitement thermique et un meulage sont appliqués à l'élément de bague (1) pour la bague de roulement à rouleaux selon la revendication 1.

5. Bague de roulement à rouleaux selon la revendication 4, dans laquelle un joint (1a), qui est une partie circonférentielle dans laquelle les faces frontales (Wa) des extrémités opposées sont reliées entre elles, est pourvu d'un marquage (4) pour identifier le joint (1a).

6. Assemblage de roulement à rouleaux (10) comprenant une bague intérieure (11), une bague extérieure (12), une pluralité d'éléments de roulement (13) et une cage (14), dans lequel la bague de roulement à rouleaux telle que décrite dans la revendication 4 est utilisée dans la bague intérieure et/ou dans la bague extérieure.

7. Assemblage de roulement à rouleaux (10) selon la revendication 6, qui est un roulement pour supporter un arbre principal d'une éolienne.

8. Assemblage de roulement à rouleaux (10) selon la revendication 6, dans lequel, parmi la bague intérieure (11) et la bague extérieure (12), la bague de roulement à rouleaux telle que décrite dans la revendication 5 est utilisée dans une bague latérale fixe et une partie périphérique, dans laquelle le marquage (4) pour identifier le joint (1a) existe, est disposée dans un côté non porteur de la bague latérale fixe.

9. Procédé de fabrication d'un élément de bague (1) pour une bague de roulement à rouleaux, étant un procédé de fabrication d'un élément de bague (1) en acier qui est un matériau de base avant l'application d'un traitement mécanique dans une bague de roulement d'un assemblage de roulement à rouleaux (10), lequel procédé comprend les étapes suivantes :
former un élément en forme de tige (W), qui a été roulé pour avoir une forme en section transversale de l'élément de bague (1), en une forme de bague et relier entre elles les faces frontales (Wa) des extrémités opposées par une liaison en phase liquide ;
tourner la forme en section transversale, obtenue par roulement, de manière à ce qu'elle ressemble à une forme en section transversale de la bague de roulement de l'assemblage de roulement à rouleaux (10) ; et
appliquer une liaison en phase solide, qui est un traitement de renforcement d'un joint (1a), au joint (1a) entre les faces frontales (Wa) sur au moins une zone axiale, qui deviendra une surface de chemin de roulement, et dans une zone en profondeur dans laquelle une tension élevée agit par effet d'un contact de roulement à partir d'une surface périphérique qui deviendra la surface du chemin de roulement, la zone en profondeur étant une profondeur qui est quatre fois une profondeur à laquelle une tension maximale orthogonale de cisaillement devient maximale.

10. Procédé de fabrication d'une bague de roulement à rouleaux, étant un procédé de fabrication d'une bague de roulement ayant une rainure de chemin de roulement (3) pour un assemblage de roulement à rouleaux (10), lequel procédé comprend les étapes suivantes :
une étape de fabrication d'un matériau de base pour la fabrication d'un élément de bague (1) en acier, qui deviendra un matériau de base pour la bague de roulement ayant une rainure annulaire (3) qui est transformée en la rainure de chemin de roulement (3), selon le procédé de fabrication tel que décrit dans la revendication 9 ; et
une étape de traitement du matériau de base pour l'application d'un tournage, d'un traitement thermique et d'un meulage à l'élément de bague (1).
